# FASCICULE DE BREVET EUROPEEN

(11) **EP 1 015 391 B1**
(45) Date de publication et mention de la délivrance du brevet: **05.06.2002**
(21) Numéro de dépôt: 98909557.5
(22) Date de dépôt: 17.02.1998
(51) Int. Cl.: C02F 3/30, C02F 3/12

(54) **PROCEDE DE TRAITEMENT BIOLOGIQUE D'UN EFFLUENT**
VERFAHREN FÜR DIE BIOLOGISCHE BEHANDLUNG VON ABWASSER
METHOD FOR THE BIOLOGICAL TREATMENT OF EFFLUENT

(30) Priorité: 03.03.1997 FR 9702706
(43) Date de publication de la demande: 05.07.2000
(73) Titulaire: OTV Omnium de Traitements et de Valorisation, 94417 St Maurice Cédex (FR)
(72) Inventeur: GILLES, Pierre, F-93270 Sevran (FR); GAID, Abdelkader, F-92110 Clichy (FR)
(74) Mandataire: Vidon, Patrice
(86) Numéro de dépôt international: FR9800307
(87) Numéro de publication internationale: WO9839256

(56) Documents cités:
- FR-A- 2 516 071
- FR-A- 2 558 819
- FR-A- 2 707 622
- US-A- 4 488 968
- US-A- 5 182 021
- US-A- 5 393 427

## Description

L'invention concerne le domaine du traitement biologique des effluents aqueux, tels que principalement les eaux usées domestiques et les eaux usées industrielles, en vue de leur épuration.

Plus précisément, l'invention concerne un procédé de traitement biologique de tels effluents mettant en oeuvre des cultures libres de micro-organismes selon la technique dite des boues activées, ledit procédé permettant de dégrader à la fois la pollution carbonée, azotée et éventuellement phosphorée contenue dans les eaux à traiter.

Selon les techniques d'épuration par boues activées, la pollution carbonée (DB0) contenue dans les eaux à traiter est dégradée, en présence d'oxygène, par l'action d'une flore microbienne hétérotrophe tandis que la dégradation de la pollution azotée est réalisée en faisant subir auxdites eaux une étape de nitrification, au cours de laquelle l'azote ammoniacal est transformé en nitrates grâce à une biomasse autotrophe en présence d'oxygène, puis une étape de dénitrification, au cours de laquelle les nitrates sont transformés en nitrites puis en azote gazeux grâce à une biomasse hétérotrophe travaillant en absence d'oxygène gazeux et capable de consommer l'oxygène des nitrates.

La dégradation de la pollution azotée nécessite donc une alternance de phases aérées et de phases anoxiques. Cette alternance peut être réalisée soit dans un bassin unique en ménageant des temps d'aération et de non aération, soit dans des zones séparées d'un ou plusieurs bassins, au moins l'une de ces zones fonctionnant en conditions d'anoxie, et l'autre ou certaines des autres en aérobiose. Dans un tel cas de figure, il est classique de placer la zone fonctionnant en anoxie en amont de celle fonctionnant en aérobiose tout en recirculant une partie de la liqueur mixte provenant du bassin aéré pour acheminer les nitrates formés dans ce bassin dans ladite zone anoxique.

Enfin, la pollution phosphorée peut quant à elle également être dégradée par voie biologique par des bactéries hétérotrophes travaillant en anaérobiose que l'on fait agir généralement en tête d'installation. Cette dégradation par voie biologique peut être complétée par un traitement physico-chimique mettant en oeuvre l'addition d'au moins un agent coagulant (tel que par exemple du chlorure ferrique ou du chlorure d'aluminium).

Parmi les procédés connus d'épuration mettant en oeuvre des cultures libres de micro-organismes, ceux utilisant des boues activées "faibles charges" sont de plus en plus fréquemment mis en oeuvre. En effet, de telles faibles charges présentent l'avantage de :
- permettre l'élimination de l'azote ;
- sortir une boue stabilisée ;
- d'accroître les performances d'élimination de la DBO et de la DCO ;
- d'éviter de prévoir en amont une décantation primaire.

A ce sujet, on notera qu'en pratique, les procédés de boues activées sont dits faibles charges lorsque l'âge des boues est supérieure à 15 jours.

Toutefois, un des inconvénients majeurs de tels procédés de boues activées faibles charges réside dans le fait qu'ils sont inadaptés pour traiter rapidement et efficacement des surplus de flux polluants pouvant notamment survenir brusquement par temps de pluie. Il est en effet fréquent de constater une dégradation importante de la qualité physico-chimique des eaux traitées en station d'épuration par temps de pluie. Lorsque les pluies surviennent ponctuellement, par exemple une ou deux fois par mois, il devient alors impossible de développer suffisament rapidement dans les bassins de boues activées, notammant ceux fonctionnant en faibles charges, la biomasse permettant de traiter efficacement de tels surplus de flux polluants, dans la mesure où cette biomasse n'a pas le temps de s'adapter à ceux-ci.

A ce sujet, on notera que le surdimensionnement des installations ne permettra pas de résoudre un tel problème. En effet, il ne suffit pas que les ouvrages soient dimensionnés pour traiter les flux polluants maximums, encore faut-il que lorsque ces flux surviennent, la biologie présente dans le système ait eu suffisamment de temps pour se développer en quantités suffisantes pour les traiter. On notera également que le traitement de la pollution azotée est la plus sensible face à une variabilité de la composition de l'effluent entrant.

Par ailleurs, on notera également qu'il a déjà été tenté dans l'état de la technique de solutionner ce problème grâce à un procédé selon lequel, avant l'introduction des eaux usées à traiter dans un réacteur biologique, on en sépare au moins partiellement les particules polluantes en suspension et on envoie les particules polluantes séparées dans un réacteur d'activation de boues, séparé et disposé en parallèle du réacteur biologique, ces particules polluantes séparées étant utilisées comme substrat principal pour le développement de microorganismes et les boues ainsi obtenues pouvant être réinjectées dans le réacteur biologique en période de surplus de flux polluants. Une telle technique est décrite dans la demande de brevet française FR 2707622. Elle présente toutefois l'inconvénient de mettre en oeuvre une réserve de boues réalisée à partir de l'effluent brut (boues primaires), constituant une biomasse non acclimatée à la dégradation biologique à la fois de la pollution carbonée, azotée et éventuellement phosphorée, c'est-à-dire incluant à la fois des bactéries hétérotrophes capables de dégrader la pollution carbonée en aérobiose et de consommer l'oxygène des nitrates en conditions anoxiques et des bactéries autotrophes, capables de nitrifier l'effluent. Cet inconvénient implique un temps de latence important pour une mise en oeuvre efficace des boues de réserve. De plus cette technique n'est intéressante que vis-à-vis du traitement de la pollution carbonée. En effet, le principe de récupérer des boues primaires riches en matières organiques dynamise essentiellement et particulièrement les bactéries hétérotrophes. On ne peut, dans ce cas, développer des bactéries autotrophes en raison de l'important substrat carboné qui est présent.

Si on désire développer des bactéries autotrophes dans un tel système, il importe de travailler avec un âge de boues élevé. Ceci implique la réalisation d'un ouvrage de dimensions aussi importantes que celles du bassin biologique, ce qui est difficilement économiquement envisageable.

La présente invention a pour objectif principal de proposer un procédé biologique de traitement des effluents aqueux permettant de résoudre ces problèmes, c'est-à-dire un procédé permettant d' obtenir une épuration de l'effluent aussi bonne en conditions de flux polluant normal qu'en conditions de surplus de flux de pollution, et ce quasi-instantanément.

On notera que l'on entend dans la présente description, les termes "surplus de flux de polluant normal" comme désignant un flux (concentration x débit) polluant excédant d'au moins 100 % le flux polluant normal.

Notamment, un des objectifs de l'invention est de décrire un tel procédé permettant de dégrader à la fois la pollution carbonée, azotée et phosphorée tant en conditions de flux polluant normal qu'en conditions de surplus de flux polluants.

Egalement un objectif de l'invention est d'obtenir un tel résultat sans augmenter significativement la concentration des boues lors du traitement biologique, c'est-à-dire en conservant l'intérêt des procédés de boues activées faibles charges.

Encore un objectif de l'invention est de proposer un tel procédé n'impliquant pas de surdimensionnement excessif des installations pour traiter les excédents de flux polluants.

Encore un objectif de l'invention est de divulguer une installation pour la mise en oeuvre d'un tel procédé.

Ces différents objectifs sont atteints grâce à l'invention qui concerne un procédé de traitement biologique d'un effluent aqueux en vue de son épuration selon lequel ledit effluent est mis en contact avec des boues activées dans au moins un bassin de traitement biologique, l'effluent traité biologiquement étant ensuite clarifié, une partie des boues en excès provenant de la clarification étant recirculée en tête dudit bassin, ledit procédé étant caractérisé en ce qu'il consiste à faire séjourner une seconde partie des boues en excès provenant de la clarification dans au moins un bassin de bioactivation aéré de façon à constituer une réserve de biomasse et, lorsque ledit effluent aqueux connaît des surplus de flux polluants, à utiliser tout ou partie de ladite réserve de biomasse pour traiter lesdits surplus de flux polluants.

Ainsi, l'invention propose, contrairement à la technique décrite dans la demande de brevet FR 2707622, d'utiliser pour constituer une réserve de biomasse, non pas des boues primaires mais des boues provenant de la décantation de la liqueur mixte, c'est-à-dire constitués d'un mélange équilibré de bactéries hétérotrophes et autotrophes aptes à pouvoir être utilisé à tout moment en cas d'apparition, même brutale, de surplus de flux polluant pour traiter efficacement ceux-ci.

On notera qu'il était également connu dans l'état de la technique de prévoir sur le circuit de retour de boues de certaines installations d'épuration un bassin dit de stabilisation, dans le but d'augmenter la concentration des boues dans le bassin biologique. Toutefois, dans le cadre des procédés de boues activées faibles charges, auxquels se rapporte plus précisément l'invention, une telle concentration des boues est généralement à éviter.

Préférentiellement, le procédé selon l'invention comprend un étape complémentaire consistant à aérer, lors du traitement des surplus de flux polluants, au moins certaines zones initialement non aérées dudit bassin de traitement biologique,

Egalement préférentiellement, l'aération dudit bassin de bioactivation est séquencée. Une telle caractéristique permet de maintenir le processus de nitrification-dénitrification au sein de ce bassin et ainsi de maintenir les bactéries autotrophes en concentration suffisante. En effet, si de telles bactéries se développent beaucoup moins rapidement que les espèces hétérotrophes, elles ont l'avantage de se détruire moins vite dans la mesure où elles peuvent utiliser l'azote restitué par l'auto-oxydation des espèces hétérotrophes.

Selon une variante particulièrement préférée de l'invention, le procédé selon celle-ci consiste :
- en régime de flux polluant normal : à faire transiter l'effluent successivement dans une première zone du bassin de traitement biologique fonctionnant en anaérobiose de façon à dégrader sa pollution phosphorée, puis dans une seconde zone fonctionnant en anoxie de façon à le dénitrifier, puis dans une troisième zone fonctionnant en aérobiose de façon à le nitrifier et à dégrader sa pollution carbonée, une partie de la liqueur mixte provenant de la dite troisième zone étant recyclée dans ladite seconde zone, à clarifier le reste de la liqueur mixte dans un clarificateur, à recycler une partie des boues provenant dudit clarificateur en tête de traitement et à évacuer le reste desdites boues (boues en excès) via au moins un bassin aéré de bioactivation ;
- en régime de surplus de flux polluant : à placer ladite première zone en aérobiose et à placer ledit bassin de traitement biologique en communication avec ledit bassin de bioactivation.

Selon une telle variante du procédé selon l'invention, il est possible d'épurer quasi intégralement l'eau entrant dans l'installation de sa pollution carbonée et azotée, même si le flux en polluants carbonées et/ou azotées de cette eau augmente brusquement.

Selon une variante du procédé, celui-ci comprendra une étape consistant à admettre, en régime de surplus de flux polluant, tout ou partie de l'effluent à traiter dans ladite seconde zone du bassin de boues activées.

Avantageusement, il sera prévu un compartiment de contact en tête dudit bassin de traitement biologique, ledit compartiment n'étant pas aéré en régime de flux polluant normal et étant aéré en régime de surplus de flux polluant.

Egalement avantageusement, la pollution phosphorée dudit effluent sera traitée en régime de surplus de flux polluant par addition d'au moins un réactif coagulant dans ledit bassin de traitement biologique. Selon une telle variante du procédé selon l'invention, il est possible d'obtenir un traitement des surplus de flux polluants conduisant à un effluent traité d'aussi bonne qualité, en ce qui concerne la pollution carbonée, azotée et phosphorée, que celui obtenu en période de flux polluant normal.

Préférentiellement, les temps de séjour desdites boues dans ledit bassin aéré de bioactivation sont compris entre 1 jour et 10 jours. Ce temps de séjour sera déterminé de façon optimal afin de diminuer la variabilité du rapport (flux polluant azoté / biomasse autotrophe) entre le fonctionnement en flux polluant normal et celui en surplus de flux polluants.

Le procédé selon l'invention est pour la mise en oeuvre dans une installation comprenant au moins un bassin de boues activées délimitant une pluralité de compartiments dont au moins certains sont pourvus de moyens d'aération, au moins un clarificateur permettant de clarifier le reste de la liqueur mixte provenant dudit bassin de boues activées, des moyens de recirculation d'une partie des boues en excès provenant du clarificateur en tête d'installation, et des moyens d'évacuation du reste desdites boues en excès, caractérisée en ce que lesdits moyens d'évacuation incluent au moins un bassin de bioactivation muni de moyens d'aération et en ce qu'elle comprend des moyens permettant de mettre en communication ledit bassin de bioactivation avec ledit bassin de boues activées.

Préférentiellement, ledit bassin comprend au moins trois compartiments : un premier compartiment muni de moyens d'aération, un second compartiment sans moyens d'aération et un troisième compartiment muni de moyens d'aération.

On notera que, selon une variante préférentielle de l'invention les seconde et troisième zones du bassin peuvent être regroupées dans un ouvrage unique de type chenal fonctionnant en aération séquencée.

Egalement préférentiellement, ledit bassin comprend quatre compartiments et inclut un compartiment de contact pourvu de moyens d'aération prévu en tête dudit bassin de boues activées. Un tel compartiment de contact permet, en période de flux polluant normal d'homogénéiser les eaux à traiter.

Bien entendu, les moyens d'évacuation de la biomasse en excès incluent avantageusement aussi au moins une unité d'épaississement (statique, par flottation, par centrifugation, table d'égouttage ou tout autre procédé connu de l'homme de l'art) prévue à la sortie dudit bassin de bioactivation de flottation. Le rôle d'une telle unité est de concentrer les boues.

L'invention, ainsi que les différents avantages qu'elle présente seront plus facilement compris grâce à la description qui va suivre d'un mode de réalisation non limitatif de celle-ci, en référence aux dessins dans lesquels :
- la figure 1 représente schématiquement une installation selon la présente invention configurée pour traiter un flux polluant normal ;
- la figure 2 représente schématiquement la même installation configurée pour traiter un surplus de flux polluant, selon le procédé préconisé par l'invention.

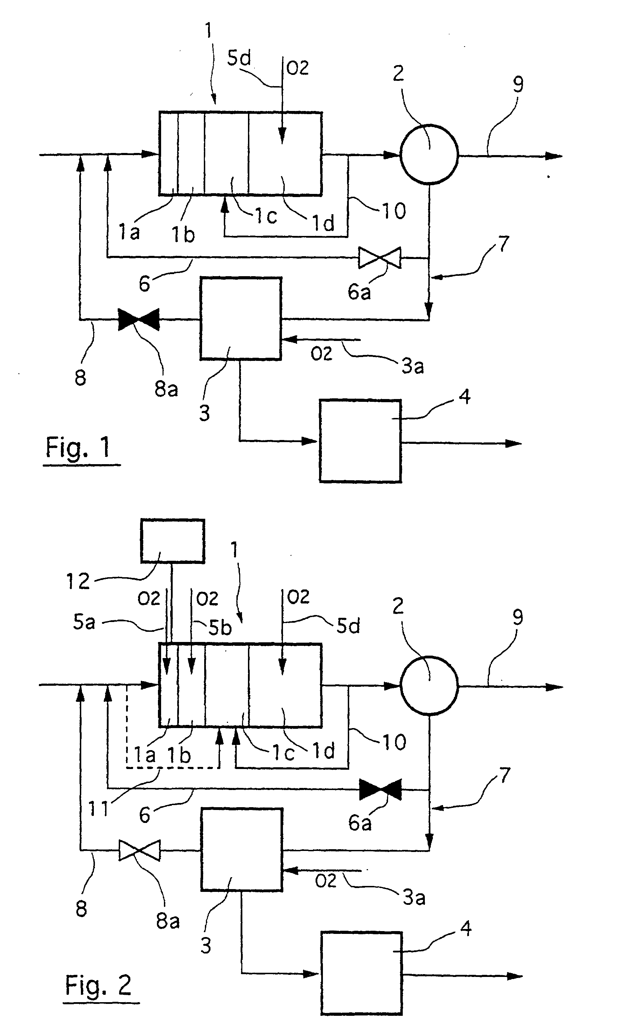

En référence à la figure 1, l'installation de traitement biologique d'eaux usées représentée schématiquement comprend un bassin de traitement biologique 1 dans lequel sont mis en oeuvre des boues activées (biomasse sous forme de flocs de cultures libres) à la sortie duquel est installé un clarificateur 2 récupérant la liqueur mixte provenant du bassin biologique 1 et permettant de faire décanter cette liqueur mixte de façon à récupérer une eau épurée en 9 et des boues qui sont évacuées du clarificateur 2 par des moyens d'évacuation 7 prévus à cet effet, une partie de ces boues pouvant être réacheminée directement en tête d'installation grâce à des moyens de recyclage 6 incluant une canalisation et un vanne 6a.

De façon classique, le bassin de traitement biologique 1 est compartimenté en quatre compartiments 1a, 1b, 1c, 1d délimitant quatre zones distinctes, les zones 1a, 1b et 1 d étant équipés de moyens d'aération.

Egalement de façon classique, des moyens de recyclage 10 d'une partie de la liqueur mixte sortant du bassin de traitement biologique par boues activées 1 permettent de recycler ladite partie dans le troisième compartiment.

Conformément à la présente invention, l'instatallation comprend par ailleurs un bassin de bioactivation 3 installé sur le circuit d'évacuation 7 des boues en excès provenant du clarificateur 2 ainsi qu'un dispositif de flottation des boues 4 en aval.

Egalement conformément à la présente invention, l'installation comprend aussi des moyens 8 incluant une vanne 8a permettant de mettre en communication ledit bassin de bioactivation 3 avec ledit bassin 1 de boues activées, de façon à intégrer, en cas de besoin, les boues activées présentes dans ce bassin de bioactivation 3 à celles du bassin de traitement biologique 1.

Dans le cadre du présent mode de réalisation, les volumes des différents compartiments du bassin 1 de traitement biologique et du bassin de bioactivation 3 sont les suivant:

| | |
|---|---|
| compartiment de contact (1a) | 600 m³ |
| compartiment de traitement (1b) | 3 500 m³ |
| compartiment de traitement (1c) | 4 500 m³ |
| compartiment de traitement (1d) | 24 400 m³ |
| Bassin de bioactivation (3) | 5 000 m³ |

En conditions de flux polluant normal, correspondant à une utilisation pour un traitement des eaux par temps sec, les compartiments 1b, 1c et 1d ont été placés dans les conditions suivantes :

| | |
|---|---|
| premier compartiment de traitement (1b) | anaérobiose |
| deuxième compartiment de traitement (1c) | anoxie |
| troisième compartiment de traitement (1d) | aérobiose |

L'utilisation d'une telle configuration permet d'obtenir une déphosphatation biologique des eaux dans le compartiment de traitement 1b, une dégradation de la pollution azotée par nitrification-dénitrification par alternance des zones anoxiques et aérobies occupant respectivement les compartiments 1c et 1d et grâce au recyclage des nitrates en zone anoxique, ainsi qu'une dégradation de la pollution carbonée par passage de l'effluent dans la zone aérée du bassin 1 délimité par le compartiment 1d, dans lequel une injection de gaz oxygéné est effectuée grâce aux moyens d'aération 5d équipant ce compartiment.

Durant l'utilisation de cette installation dans cette configuration, les boues en excès provenant du clarificateur 2 sont stockées dans le bassin de bioactivation 3, avant d'être évacuées vers le traitement des boues. Elles ne sont pas recyclées dans le bassin de boues activées 1, la vanne 8a restant fermée. Lors du stockage des boues dans le bassin de bioactivation 3, les moyens d'aération 3a de ce bassin sont mis en oeuvre de façon séquencées afin d'entretenir à la fois une flore autotrophe et hétérotrophe en maintenant le processus de nitrification-dénitrification. L'évacuation des boues présentes dans ce bassin de bioactivation 3 vers le premier ouvrage de traitement des boues en excès est régulée de façon à obtenir un temps de séjour des boues moyen dans le bassin de bioactivation de 1 à 10 jours. On notera qu'un tel stockage aéré, s'il détruit par oxydation une faible partie de la biomasse hétérotrophe est bien moins perturbant pour la biomasse autotrophe nitrifiante dans la mesure où celle-ci peut réutiliser l'azote de synthèse de la biomasse hétérotrophe, libéré lors du processus d'auto-oxydation de celle-ci.

Les résultats obtenus sur les abattements des pollutions carbonée (DBO, DCO), azotée (NTK, NGL) et phosphorée (P) ainsi que sur l'abattement des matières en suspension (MES) d'une eau montrant un flux polluant normal sont donnés dans le tableau 1 ci-après, l'installation ayant été testée pour traiter 21600 M³/J.

**Tableau 1**

| Paramètres | Effluent brut | Effluent traité | % élimination |
|---|---|---|---|
| DBO mg/l | 420 | 6 | 98.5 |
| DCO mg/l | 1035 | 69 | 93.3 |
| MES mg/l | 447 | 13 | 97.1 |
| NTK mg/l | 72 | 5.1 | 92.9 |
| NGL mg/l | 72 | 6.9 | 90.4 |
| P mg/l | 20 | 1.0 | 95.0 |

En conditions de surplus de flux polluant (détectés à l'aide de moyens classiques connus de l'homme de l'art et non représentés sur les figures), correspondant par exemple à une utilisation pour un traitement des eaux par temps de pluie, les compartiments 1b, 1c et 1d ont été placés dans les conditions suivantes :

| | |
|---|---|
| compartiment de traitement (1b) | aérobiose |
| compartiment de traitement (1c) | anoxie |
| compartiment de traitement (1d) | aérobiose |

Pour ce faire le moyen d'aération 5b équipant le compartiment 1b a été mis en marche.

Par ailleurs, le compartiment de contact 1a a été transformé en compartiment de traitement biologique en mettant en marche également les moyens d'aération 5a dont il est équipé.

Parallèlement, la vanne 6a a été actionnée de façon à fermer le circuit de recirculation directe des boues provenant du clarificateur et la vanne 8a a été ouverte de façon à injecter les boues de réserve présentes dans le bassin de bioactivation 3 dans le compartiment la du bassin 1.

Egalement parallèlement, l'eau à traiter peut en tout ou en partie être injectée directement dans le compartiment 1c via la canalisation 11 pour améliorer si nécessaire la cinétique de dénitrification dans ce compartiment.

Egalement parallèlement, des moyens de distribution d'agent coagulant 12 ont été mis en oeuvre de façon à traiter la pollution phosphorée de l'effluent.

Cet apport de boues activées supplémentaires permet de faire face quasi instantanément au surplus de flux polluant et de permettre une épuration efficace de celui-ci consistant en un fort abattement de la pollution carbonée, azotée et phosphorée.

L'installation ainsi configurée a été testée lors de l'apparition brutale d'un surplus de flux polluant survenu par temps de pluie (débit : 46500 m³ / jour). Les résultats de l'épuration obtenue sont donnés dans le tableau 2 ci-après.

**Tableau 2**

| Paramètres | Effluent brut | Effluent traité | % élimination |
|---|---|---|---|
| DBO mg/l | 597 | 4.7 | 99 |
| DCO mg/l | 1391 | 80 | 94.2 |
| MES mg/l | 609 | 13 | 97.8 |
| NTK mg/l | 90 | 7.3 | 91.8 |
| P mg/l | 90 | 10.8 | 88.0 |

La comparaison des dernières colonnes des tableaux 1 et 2 laisse apparaître que, grâce au procédé et à l'installation selon l'invention, l'effluent est aussi bien épuré en période de flux polluant normal (temps sec) qu'en période de surplus de flux polluant (temps de pluie) survenant brutalement. Notamment, grâce à la disponibilité d'une biomasse autotrophe, l'invention conduit au maintien des performances élevées d'élimination de l'azote total NTK, performances qui ne pourraient être conservées dans les conditions de fonctionnement habituelles lorsqu'une augmentation brutale des flux de pollution azotés est observée.

L'invention permet d'obtenir un tel résultat grâce à la réserve de boues réalisée dans le bassin de bioactivation aéré prévu dans le circuit d'extraction des boues provenant du clarificateur, et présente lors du traitement des surplus de flux polluant l'avantage de ne pas accroître les concentrations en boues dans le bassin de traitement biologique 1, ce qui permet de sécuriser le fonctionnement de la clarification.

Le retour au fonctionnement en flux normal polluant (temps sec) se fait de façon instantané en fermant la vanne 8a et en rouvrant la vanne 6a. Les compartiments 1a, 1b, 1c, 1d retrouvent leurs fonctions intiales ainsi que les conditions de fonctionnement (anaérobie, anoxie, aérobie).

Le mode de réalisation de l'invention ici décrit n'a pas pour objet de réduire la portée de l'invention. Le procédé selon l'invention pourra donc notamment être mis en oeuvre dans le cadre d'installations incluant plus d'un bassin de boues activées et/ou délimitant plus de trois compartiments.

## Revendications

1. Procédé de traitement biologique d'un effluent aqueux en vue de son épuration selon lequel ledit effluent est mis en contact avec des boues activées dans au moins un bassin de traitement biologique (1), l'effluent traité biologiquement étant ensuite clarifié, une partie des boues extraites de la clarification étant recirculée en tête dudit bassin, ledit procédé étant **caractérisé en ce qu'**il consiste à faire séjourner une seconde partie des boues extraites de la clarification (boues en excès) dans au moins un bassin de bioactivation (3) aéré de façon à constituer une réserve de biomasse et, lorsque ledit effluent aqueux connaît des surplus de flux polluants, à utiliser tout ou partie de ladite réserve de biomasse pour traiter lesdits surplus de flux polluants.

2. Procédé de traitement biologique d'un effluent aqueux selon la revendication 1 **caractérisé en ce qu'**il comprend un étape complémentaire consistant à aérer, lors du traitement des surplus de flux polluants, au moins certaines zones (1a,1b) initialement non aérées dudit bassin (1) de traitement biologique.

3. Procédé de traitement biologique d'un effluent aqueux selon la revendication 1 ou 2 **caractérisé en ce que** l'aération dudit bassin de bioactivation (3) est séquencée.

4. Procédé de traitement biologique d'un effluent aqueux selon la revendication 2 ou 3 **caractérisé en ce qu'**il consiste :
- en régime de flux polluant normal : à faire transiter l'effluent successivement dans une première zone (1b) du bassin (1) de traitement biologique fonctionnant en anaérobiose de façon à dégrader sa pollution phosphorée, puis dans une seconde zone (1c) fonctionnant en anoxie de façon à le dénitrifier, puis dans une troisième zone (1d) fonctionnant en aérobiose de façon à le nitrifier et à dégrader sa pollution carbonée (DBO), une partie de la liqueur mixte provenant de la dite troisième zone (1d) étant recyclée dans ladite seconde zone (1c), à clarifier le reste de la liqueur mixte dans un clarificateur (2), à recycler une partie des boues extraites dudit clarificateur (2) en tête de traitement et à évacuer le reste desdites boues extraites via au moins un bassin aéré de bioactivation (3) ;
- en régime de surplus de flux polluant : à placer ladite première zone (1b) en aérobiose et à placer ledit bassin de traitement biologique (1) en communication avec ledit bassin de bioactivation (3).

5. Procédé de traitement biologique d'un effluent aqueux selon la revendication 4 **caractérisé en ce qu'**il consiste à admettre, en régime de surplus de flux polluant, tout ou partie de l'effluent à traiter dans ladite seconde zone (1c) dudit bassin (1).

6. Procédé selon l'une quelconque des revendications 2 à 5 **caractérisé en ce qu'**il consiste à prévoir un compartiment de contact en tête dudit bassin de traitement biologique, ledit compartiment n'étant pas aéré en régime de flux polluant normal et étant aéré en régime de surplus de flux polluant.

7. Procédé selon l'une quelconque des revendications 4 ou 6 **caractérisé en ce qu'**il comprend une étape consistant à traiter la pollution phosphorée dudit effluent en régime de surplus de flux polluant par addition d'au moins un réactif coagulant dans ledit bassin (1) de traitement biologique .

8. Procédé selon l'une des revendications 1 à 7 **caractérisé en ce que** les temps de séjour desdites boues dans ledit bassin aéré de bioactivation (3) sont compris entre 1 jour et 10 jours.

## Patentansprüche

1. Verfahren zur biologischen Abwasserreinigung, bei dem das Abwasser in mindestens einem biologischen Behandlungsbecken (1) mit aktiviertem Schlamm in Berührung gebracht wird, wobei das biologisch behandelte Abwasser nachträglich geklärt wird und ein Teil des beim Klären extrahierten Schlamms zum Beckeneingang zurückgeleitet wird,
**dadurch gekennzeichnet, dass** es darin besteht, einen zweiten Teil des beim Klären extrahierten Schlamms (überschüssiger Schlamm) in mindestens einem belüfteten Bioaktivierungsbecken (3) verweilen zu lassen, um eine Biomassereserve zu erreichen und, wenn der Abwasserfluss einen Überschuss an Verunreinigungen enthält, alles oder einen Teil dieser Biomassereserve zum Behandeln dieser überschüssigen Verunreinigungen zu verwenden.

2. Verfahren zur biologischen Abwasserreinigung nach Anspruch 1,
**dadurch gekennzeichnet, dass** es einen zusätzlichen Schritt umfasst, bei dem während der Behandlung der überschüssigen Verunreinigungen zumindest bestimmte ursprünglich nicht belüftete Bereiche (1a, ab) des biologischen Behandlungsbeckens (1) belüftet werden.

3. Verfahren zur biologischen Abwasserreinigung nach Anspruch 1 oder 2,
**dadurch gekennzeichnet, dass** die Belüftung des Bioaktivierungsbeckens (3) nach einer gegebenen Reihenfolge abläuft.

4. Verfahren zur biologischen Abwasserreinigung nach Anspruch 2 oder 3,
**dadurch gekennzeichnet, dass** es die folgenden Schritte umfasst:
- bei normalem Gehalt an Verunreinigungen im Abwasserfluss wird das Abwasser der Folge nach durch einen ersten Bereich (1b) des biologischen Behandlungsbeckens (1) geleitet, welches unter anaeroben Bedingungen betrieben wird, um das Zersetzten der phosphorhaltigen Verunreinigungen zu bewirken, dann durch einen zweiten Bereich (1c), der unter verringerter Sauerstoffkonzentration betrieben wird, um das Abwasser zu denitrieren, dann durch einen dritten Bereich (1d), der unter aeroben Bedingungen betrieben wird, um das Abwasser zu nitrieren und die Zersetzung der kohlenstoffhaltigen Verunreinigungen zu bewirken (DBO), wobei ein Teil des aus dem dritten Bereich (1d) stammenden Flüssigkeitsgemisches in den zweiten Bereich (1c) zurückgeleitet wird, während der Rest des Flüssigkeitsgemisches in einem Klärwerk (2) geklärt wird, ein Teil des aus diesem Klärwerk (2) extrahierten Schlammes zum Eingang des Verfahrens zurückgeleitet und der Rest dieses aus dem Klärwerk (2) extrahierten Schlammes über mindestens einem belüfteten Bioaktivierungsbecken (3) abgeleitet wird;
- bei einem Überschuss an Verunreinigungen im Abwasserfluss wird der erste Bereich (1b) unter aerobe Bedingungen betrieben und das biologische Behandlungsbecken (1) mit dem Bioaktivierungsbecken (3) verbunden.

5. Verfahren zur biologischen Abwasserreinigung nach Anspruch 4,
**dadurch gekennzeichnet, dass** es bei Überschuss an Verunreinigungen im Abwasserfluss das gesamte zu behandelnde Abwasser oder ein Teil des zu behandelnden Abwassers in den zweiten Bereich (1c) des Beckens (1) geleitet wird.

6. Verfahren nach einem der Ansprüche 2 bis 5,
**dadurch gekennzeichnet, dass** am Eingang des biologischen Behandlungsbeckens ein Berührungsbereich vorgesehen ist, der unter normalem Gehalt an Verunreinigungen im Abwasserfluss nicht belüftet wird und dagegen bei Überschuss an Verunreinigungen im Abwasserfluss belüftet wird.

7. Verfahren nach einem der Ansprüche 4 oder 6,
**dadurch gekennzeichnet, dass** es einen Schritt umfasst, bei dem die phosphorhaltigen Verunreinigungen des Abwassers bei Überschuss an Verunreinigungen im Abwasserfluss durch Zugabe von mindestens einem ausflockenden Reagenz in das biologische Behandlungsbecken (1) behandelt wird.

8. Verfahren nach einem der Ansprüche 1 bis 7,
**dadurch gekennzeichnet, dass** die Verweildauer des Schlamms im Bioaktivierungsbecken (3) 1 bis 10 Tage beträgt.

## Claims

1. Process for the biological treatment of an aqueous effluent to purify it, according to which the said effluent is placed in contact with activated sludge in at least one biological treatment tank (1), the biologically treated effluent then being clarified, some of the sludge extracted from the clarification being recycled into the top of the said tank, the said process being **characterized in that** it consists in leaving a second portion of the sludge extracted from the clarification (excess sludge) to stand in at least one aerated bioactivation tank (3) so as to constitute a biomass reserve and, when there are surpluses of pollutant flows in the said aqueous effluent, in using all or some of the said biomass reserve to treat the said surpluses of pollutant flows.

2. Process for the biological treatment of an aqueous effluent according to Claim 1, **characterized in that** it comprises an additional step which consists in aerating, during the treatment of the surpluses of pollutant flows, at least some zones (1a, 1b) of the said biological treatment tank (1) that are not initially aerated.

3. Process for the biological treatment of an aqueous effluent according to Claim 1 or 2, **characterized in that** the aeration of the said bioactivation tank (3) is sequential.

4. Process for the biological treatment of an aqueous effluent according to Claim 2 or 3, **characterized in that** it consists:
- during a regime of normal pollutant flow: in making the effluent pass successively through a first zone (1b) of the biological treatment tank (1) functioning anaerobically so as to degrade its phosphorus-based pollution, then through a second zone (1c) functioning anoxically so as to denitrify it, and then through a third zone (1d) functioning aerobically so as to nitrify it and degrade its carbon-based pollution (BOD), some of the mixed liquor obtained from the said third zone (1d) being recycled into the said second zone (1c), in clarifying the rest of the mixed liquor in a clarifier (2), in recycling some of the sludge extracted from the said clarifier (2) into the start of the treatment and in removing the rest of the said extracted sludge via at least one aerated bioactivation tank (3);
- during a regime of surplus pollutant flow: in placing the said first zone (1b) under aerobic conditions and in placing the said biological treatment tank (1) in communication with the said bioactivation tank (3).

5. Process for the biological treatment of an aqueous effluent according to Claim 4, **characterized in that** it consists in admitting, during a regime of surplus pollutant flow, all or some of the effluent to be treated into the said second zone (1c) of the said tank (1).

6. Process according to any one of Claims 2 to 5, **characterized in that** it consists in providing a contact compartment at the top of the said biological treatment tank, the said compartment not being aerated during a regime of normal pollutant flow, and being aerated during a regime of surplus pollutant flow.

7. Process according to either of Claims 4 and 6, **characterized in that** it comprises a step consisting in treating the phosphorus-based pollution of the said effluent during a regime of surplus pollutant flow by adding at least one coagulating reagent to the said biological treatment tank. (1).

8. Process according to one of Claims 1 to 7, **characterized in that** the residence times of the said sludge in the said aerated bioactivation tank (3) are between 1 day and 10 days.
